# EUROPEAN PATENT SPECIFICATION

(11) **EP 4 102 756 B1**
(45) Date of publication and mention of the grant of the patent: **04.06.2025**
(21) Application number: 21750946.2
(22) Date of filing: 20.01.2021
(51) Int. Cl.: H04L 5/00, H04W 52/02, H04W 72/04, H04W 76/27, H04W 76/28

(54) **SIGNAL TRANSMISSION METHOD AND DEVICE**
SIGNALÜBERTRAGUNGSVERFAHREN UND -VORRICHTUNG
PROCÉDÉ ET DISPOSITIF D'ÉMISSION DE SIGNAL

(30) Priority: 07.02.2020 CN 202010082642
(43) Date of publication of application: 14.12.2022
(73) Proprietor: Datang Mobile Communications Equipment Co., Ltd., Beijing 100085 (CN)
(72) Inventor: WANG, Jiaqing, Beijing 100085 (CN); YANG, Meiying, Beijing 100085 (CN); LUO, Chen, Beijing 100085 (CN); SUN, Shaohui, Beijing 100085 (CN)
(74) Representative: Cabinet Nony
(86) International application number: PCT/CN2021/072919
(87) International publication number: WO 2021/155742

(56) References cited:
- WO-A1-2019/028849
- CN-A- 110 072 285
- CN-A- 110 690 947
- US-A1- 2019 254 110

## Description

### Technical Field

The present application relates to the field of communication technologies, and particularly to a signal communication method and device.

### Background

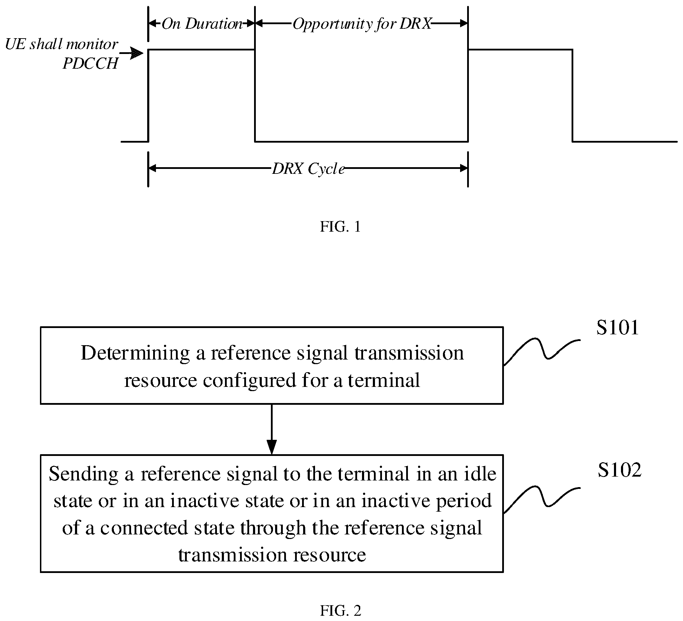

In the 5G New Radio (NR) system, there are currently three types of working states of a terminal (User Equipment, UE): idle state (RRC_IDLE), inactive state (RRC_Inactive) and connected state (RRC_Connected). Only the UE in the RRC_Connected state is allowed to detect a Physical Downlink Control Channel (PDCCH) scrambled by, for example, a Cell-Radio Network Temporary Identifier (C-RNTI). Since the power consumption of the NR terminal in the RRC_Connected state (mode) has a decisive influence on the system power consumption, the NR Release 16 (Rel-16) standardizes the power saving of the UE in the connected state. In the RRC_Connected state, the UE needs to continuously monitor the PDCCH (for example, scrambled by the C-RNTI) to learn the sending information of the downlink PDSCH. The packet-based data stream is usually bursty, and there is data transmission for a period of time, but there is no data transmission for a next long period of time, and the continuous monitoring of the PDCCH will inevitably lead to the rapid power consumption of the UE. Therefore, when there is no data transmission, it is possible to stop receiving the PDCCH (stop the blind detection of the PDCCH at this time) to reduce the power consumption. Therefore, the design of the 3rd Generation Partnership Project (3GPP) is to achieve the purpose of power saving through a Discontinuous Reception (DRX) mechanism, as shown in FIG. 1. During the DRX cycle, the UE only monitors the PDCCH in the On duration. During the Opportunity for DRX, i.e., during the DRX deactivation cycle (DRX OFF), the UE does not receive the PDCCH to reduce the power consumption, that is, enters the sleep state.

The NR Rel-16 introduces a group common PDCCH as an energy saving signal before the DRX activation cycle (DRX ON). The PDCCH is transmitted during the DRX OFF and is scrambled by a Power Saving RNTI (PS-RNTI). The UE will wake up the receiver in the following DRX cycle only if the energy saving signal carries a UE wake-up indication; otherwise, the Rel-16 UE will continue sleeping.

For the UE in the RRC_IDLE or RRC_Inactive state, the base station does not know which base station the UE resides in. For the terminals (UEs) in the Tracking Area (TA)/RAN (Radio Access Network)-based Notification Area (RNA), the base station or the core network will trigger a paging signal to wake up the UEs to enter the RRC_Connected state (mode) to receive data or to receive the system information update scrambled by the SI-RNTI (System information-RNTI).

Currently, the 3GPP has no solution for how to transmit a Reference Signal (RS) for a UE in the RRC_IDLE or RRC_Inactive mode in the NR system.

In patent application US2019254110A1, a method for a user equipment (UE) apparatus to reduce power consumption in response to an outcome of a signal reception is provided. The outcome can indicate whether or not the UE needs to be active at a next discontinuous reception (DRX) cycle. The signal can also provide configurations of parameters for transmissions or receptions during the next DRX cycle and be used by the UE for measurements and to obtain channel state information.

In patent application CN110072285A, a frequency domain resource configuration method, a terminal and a base station are provided. The method includes the steps of sending the system information, where the system information includes the frequency domain resource configuration parameters, the frequency domain resource configuration parameters are used for configuring N groups of downlink frequency domain resources for an idle state terminal or an inactive state terminal, N is an integer larger than or equal to 1, and the system information is SIB or MIB; and sending at least one of a paging message and a reference signal to the idle state terminal or the inactive state terminal on the N groups of downlink frequency domain resources.

In patent application CN110690947A, it is provided a signal processing method and device. The method includes: sending a first message to a network side device, the first message being used for requesting to configure a first CSI-RS in a connected state, an idle state or an inactive state for a terminal device, or used for requesting to configure a first configuration parameter of the first CSI-RS in the connected state, the idle state or the inactive state for the terminal device; receiving feedback information of the first message from network side equipment; and performing signal processing according to the first CSI-RS, or performing signal processing according to the first CSI-RS and a synchronization signal block SSB.

### Summary

The embodiments of the present application provide a signal communication method and device, so as to realize the RS signal communication for a UE in the RRC_IDLE or RRC_Inactive mode in the NR system, thereby improving the receiving performance and power saving performance of the UE.

The invention is as defined in the appended set of claims.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
FIG. 1 is a schematic diagram of a DRX cycle.
FIG. 2 is a schematic flowchart of a signal communication method at the network side according to embodiments of the present application.
FIG. 3 is a schematic flowchart of a signal communication method at the terminal side according to embodiments of the present application.
FIG. 4 is a schematic structural diagram of a signal communication device at the network side according to embodiments of the present application.
FIG. 5 is a schematic structural diagram of a signal communication device at the terminal side according to embodiments of the present application.
FIG. 6 is a schematic structural diagram of another signal communication device at the network side according to embodiments of the present application.
FIG. 7 is a schematic structural diagram of another signal communication device at the terminal side according to embodiments of the present application.

### Detailed Description

The technical solutions in the embodiments of the present application will be described clearly and completely below in combination with the accompanying drawings in the embodiments of the present application. Obviously the described embodiments are only a part of the embodiments of the present application but not all the embodiments.

For the NR system, both the power saving and receiving robustness optimization in the RRC_IDLE or RRC_Inactive mode are very important. For example, a low-complexity NR terminal, smart wearable device or sensor device mainly works in the RRC_IDLE or RRC_Inactive mode, and has a stricter requirement on power saving than the ordinary NR terminal. For a UE working in the RRC_IDLE or RRC_Inactive mode for a long time, the UE will receive the paging or system information. In order to achieve the normal reception, the UE needs to perform a cell search process, receive a Synchronization Signal Block (SSB) and the system information, and reside in a cell. In order to meet the reception quality requirement, in some cases, e.g., during the Active Time, the base station also configures various Reference Signals (RSs) for the UE, where the RSs may include: Channel State Information-Reference Signal (CSI-RS) for channel tracking (the NR standard includes at least CSI-RS for tracking and/or Phase-Tracking Reference Signal (PT-RS)), CSI-RS for mobility measurement (called CSI-RS for mobility in the NR), CSI-RS for channel measurement reporting. For the UE in the RRC_IDLE or RRC_Inactive mode, the base station does not know which cell the UE resides in, and cannot configure the above RS for the UE; for the UE in the connected state (RRC-connected), when the Discontinuous Reception (DRX) is configured, the NR standard stipulates that the UE can measure the CSI-RS for mobility only within the Active Time (DRX ON cycle); for the CSI-RS for CSI measurement reporting, the NR standard stipulates that the latest CSI-RS measurement opportunity must be within the Active Time, and the CSI measurement results are not allowed to be reported during the DRX OFF; whether the CSI for tracking (that is, Tracking Refernece Signal (TRS)) is received during the DRX OFF depends on the UE implementation. The base station may configure the periodic TRS for the UE, and the base station may also send the TRS during the DRX OFF cycle. Whether the UE receives the TRS for fine synchronization depends on the UE's own implementation algorithm. For the UE in the RRC_IDLE or RRC_Inactive mode, the base station cannot notify the UE of the RS for channel tracking and mobility measurement and its CSI report through signaling, and the UE cannot use the above RS to improve the system performance and reduce the power consumption.

The embodiments of the present application provide a signal communication method and device, so as to realize the RS signal communication for a UE in the RRC_IDLE or RRC_Inactive mode in the NR system, thereby improving the receiving performance and power saving performance of the UE.

Here, the method and device are based on the same application concept. Since the principle of solving the problem in the method is similar to that in the device, the implementations of the device and method can refer to each other, and the repeated description thereof will be omitted.

The technical solutions provided by the embodiments of the present application may be applicable to various systems, especially 5G systems. For example, the applicable systems may be: Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide interoperability for Microwave Access (WiMAX) system, 5G system and 5G NR system, etc. These systems all include terminal devices and network devices.

The terminal device involved in the embodiments of the present application may be a device for providing the voice and/or data connectivity to the user, a handheld device with the wireless connection function, or other processing device connected to the wireless modem. In different systems, the terminal device may have different names. For example, in a 5G system, the terminal device may be referred to as User Equipment (UE). The wireless terminal device can communicate with one or more core networks via the RAN, and the wireless terminal device can be a mobile terminal, such as a mobile telephone (or called "cellular" telephone), and a computer with the mobile terminal, for example, can be a portable, pocket, handheld, computer built-in or vehicle-carried mobile device, and they exchange the voice and/or data with the radio access network. For example, Personal Communication Service (PCS) telephone, cordless telephone, Session Initiation Protocol (SIP) telephone, Wireless Local Loop (WLL) station, Personal Digital Assistant (PDA) and other devices. The wireless terminal device can also be called system, subscriber unit, subscriber station, mobile station, mobile, remote station, access point, remote terminal, access terminal, user terminal, user agent, user device, which is not limited in the embodiments of the present application.

The network device involved in the embodiments of the present application may be a base station, which may include a plurality of cells. Depending on specific application scenarios, the base station may also be called access point, or may refer to the device in the access network communicating with the wireless terminal via one or more sectors over the air interface or other names. The network device may be used to perform the inter-conversion between the received air frame and Internet Protocol (IP) packet, and used as the router between the wireless terminal device and the rest of the access network, where the rest of the access network may include IP networks. The network device may further coordinate the attribute management of the air interface. For example, the network device involved in the embodiments of the present application can be a network device (Base Transceiver Station (BTS)) in the Global System of Mobile communication (GSM) or Code Division Multiple Access (CDMA), or can be a network device (NodeB) in the Wideband Code Division Multiple Access (WCDMA), or can be an evolutional network device (evolutional Node B (eNB or e-NodeB)) in the Long Term Evolution (LTE) system, a 5G base station in the 5G network architecture (next generation system), or can be a Home evolved Node B (HeNB), a relay node, femto, pico, etc., which is not limited in the embodiments of the present application.

The embodiments of the present application will be described below in detail with reference to the drawings of the specification. It should be noted that the showing order of the embodiments of the present application only represents the sequential order of the embodiments, but does not represent the pros and cons of the technical solutions provided by the embodiments.

In embodiments of the present application, the network configures the transmission resource of the reference signal in the RRC_IDLE or RRC_Inactive state or in the DRX OFF cycle under the RRC-connected state within a single cell (or base station) or multiple cells (or multiple base stations) for the terminal through a standard agreed method and/or high-layer signaling and/or dynamic signaling, where the DRX cycle may be configured in the RRC-connected mode, and the DRX cycle is divided into two parts: active period (DRX ON) and inactive period (DRX OFF). During the DRX ON, the UE needs to detect the PDCCH; and during the DRX OFF, the UE is in the sleep state without detecting the PDCCH. That is to say, in the embodiments of the present application, the RS transmission resource may be configured for the terminal in the RRC_IDLE state, or the RS transmission resource may be configured for the terminal in the RRC_Inactive state, or the RS transmission resource may be configured for the terminal within the DRX OFF cycle in the RRC-connected state.

Optionally, the base station configures the RS transmission resource for the UE in the connected state, or the configuration information of the RS transmission resource is scheduled by using the PDCCH carried by a control resource set (CORESET#0) or a search space (search space#0) in the RRC_IDLE or RRC_Inactive mode.

Optionally, the reference signal is used for at least one of channel tracking, link maintenance, CSI measurement, beam management, Radio Resource Management (RRM) measurement or other functions.

Optionally, the high-layer signaling and/or dynamic signaling may be applicable to a terminal in the RRC-idle or inactive or RRC-connected state during the DRX OFF cycle.

Optionally, the transmission resource configuration information includes at least one of: frequency domain resources for transmitting the RS, time domain transmission resources or opportunities (time metric value) for transmitting signals or channels when the terminal is in the RRC_IDLE or RRC_Inactive mode.

Optionally, a plurality of predetermined cells (or base stations) are divided into a plurality of groups, the same reference signal transmission resources are configured for each group of cells (or base stations), and no reference signal transmission resource is configured for cells outside the plurality of predetermined cells, or the UE does not wish to receive the RS signal on the reference signal transmission resources configured for cells outside the plurality of predetermined cells.

Here, the plurality of predetermined cells (or base stations) may be determined according to actual needs, which are not limited in the embodiments of the present application.

Optionally, the base station notifies the terminal of whether to configure the RS transmission resource for the terminal in the RRC_IDLE or RRC_Inactive mode through Radio Resource Control (RRC) signaling or a Media Access Control-Control Element (MAC CE) or physical-layer explicit signaling.

If no RS transmission resource is configured for the terminal in the RRC_IDLE or RRC_Inactive mode through the RRC signaling or MAC CE or physical-layer explicit signaling, the default processing method is used, for example, the UE is not allowed to receive the RS on the configured resource, or the UE is allowed to receive the RS on the configured resource.

The terminal receives the RS in the RRC_IDLE or RRC_Inactive mode as needed according to the RS transmission resource configured by the base station.

Optionally, the base station and the terminal define the actual sending opportunity of the RS through a preset rule, the UE only receives the RS signal on the RS sending opportunity that satisfies the preset rule, and the base station only sends the RS signal on the RS sending opportunity that satisfies the preset rule.

The preset rule may be determined according to actual needs, and is not limited in the embodiments of the present application.

If there is no SSB sending within the preset time period from the signal/channel sent in the RRC_IDLE or RRC_Inactive mode, the base station sends the RS signal on the preset resource of the RS. For example, the PSS/SSS included in the SSB may be used for synchronization. It is assumed that the RS transmission resource is on a fixed Orthogonal Frequency Division Multiplexing (OFDM) symbol before that of a signal to be sent in the idle state. If the sending position of SSB is just 2 OFDM symbols away from sending resource of the transmission signal (paging), the addition of an extra RS does not make much sense, and the extra RS may collide with the SSB, so the RS may not be sent on the resource. Of course, for the simplicity of standardization, the RS may also be sent at a time domain position with fixed distance from that of paging in the time domain, regardless of whether there is an SSB.

Optionally, the base station configures transmission resources on which the RS can be received by the UE in the idle state for the UE in the connected state, where these transmission resources are RS resources that the UE can receive in the connected state.

Optionally, the network side, such as a base station, configures the RRC signaling for the UE, where the RRC signaling takes effect when the terminal is in the idle and/or inactive mode, and the RRC signaling function is used to configure the configuration information related to the RS transmission of the UE in the RRC_IDLE or RRC_Inactive mode. The configuration information may, for example, include the resource configuration information and/or whether RS transmission resources are configured for the UE in the RRC_IDLE or RRC_Inactive mode.

Optionally, the base station configures transmission resources on which the RS can be received by the UE in the idle state for the UE in the connected state, including, for example, one or a combination of the following steps.

Step 1: The UE in the connected state sends the RS transmission resource request information to the base station, where the RS transmission resource is the transmission resource for receiving the RS by the UE in the RRC_IDLE or RRC_Inactive state.

Step 2: The base station configures whether the UE receives the RS in the RRC_IDLE or RRC_Inactive state; if the base station configures that the UE needs to or may receive the RS in the RRC_IDLE or RRC_Inactive state or the base station configures the RS transmission resource for the UE, the UE receives the RS sent by the base station on the configured RS transmission resource in the current resident cell; if the base station configures no RS transmission resource for the UE in the RRC_IDLE or RRC_Inactive state, the UE does not receive the RS sent by the base station.

Step 3: If the UE moves out of the current cell in the RRC_IDLE or RRC_Inactive state and resides in a new cell, the UE re-enters the connected state and sends the RS transmission resource request information. Then, the same step as the above step 2 is performed.

Optionally, the base station configures the valid period of the RS resource configured by the RRC signaling for the UE in the RRC_IDLE or RRC_Inactive state or the aperiodic RS transmission resource through high-layer signaling or physical-layer signaling. Although the RRC signaling configured by the current standard is notified by the base station to the UE, the RRC signaling is valid in the RRC-connected state. Once the UE enters the RRC-idle/inactive mode, the content of the signaling originally configured in the RRC-connected state cannot be applied to the RRC-idle/inactive mode, because the base station does not know where the UE in the idle state is when there is no service. Since the attribution of the UE is not known, the resources configured by the RRC signaling configured by the original cell cannot be used for the idle mode function; if it is desired that the RS resource configured by the RRC can be used for the idle mode, the dedicated signaling needs to be configured for the idle mode or both the idle mode and the RRC-connected mode. The so-called valid period means that the configuration in the RRC-connected state can take effect in the idle state. Generally, only the transmission opportunity is periodic, but the actual transmission is aperiodic. For example, the paging for the UE sometimes exists only on a few paging occasions, and the RS is only sent before the paging occasion at which the paging is actually sent.

Optionally, the base station determines an RS sending opportunity (time-frequency resource) according to a preset rule, and sends the RS signal at an RS sending position (time-frequency position) that satisfies the preset rule. The UE only receives the RS signal on the transmission resource which satisfies the preset rule.

The preset rule is a method pre-agreed by the base station and the terminal or a manner configured by the RRC signaling. The specific rule may be determined according to actual needs, and is not limited in the embodiments of the present application.

The preset rule includes, for example:
when there is a signal to be sent by the base station in a periodic sending opportunity, sending a reference signal corresponding to the signal to be sent.

The UE side can receive the corresponding RS signal firstly, and then try to receive a signal/channel sent in the RRC-idle/inactive state.

Alternatively, if the RS signal is detected, the subsequent signal/channel detection in the RRC-idle/inactive state is triggered; otherwise, the UE abandons the subsequent signal/channel detection in the RRC-idle/inactive state associated with the transmission resource.

The RS transmission resource for the terminal in the RRC_IDLE or RRC_Inactive mode may be, for example, the RS resource configured for the aperiodic signal/channel, and the RS transmission resource may be associated with the resources of signals/channels transmitted by the terminal in the RRC_IDLE or RRC_Inactive mode in a predetermined manner.

The base station and the terminal can receive the RS within a predetermined time window before receiving one or more signals/channels in the RRC_IDLE or RRC_Inactive state, and the UE does not want to receive the RS on the RS sending opportunities or resources outside the window.

If there is an SSB between the resource of receiving signals/channels and the RS transmission resource, the UE may not want to receive the RS on the RS sending opportunity. In fact, the base station may not send the RS on the resource where the UE does not want to receive the RS signal, thereby reducing the overhead.

If the RS for channel tracking is detected, the subsequent signal/channel detection in the RRC_IDLE or RRC_Inactive state can be triggered; otherwise, the UE abandons the subsequent signal/channel detection opportunity in the RRC-idle/inactive state associated with the RS transmission resource.

Optionally, the base station configures the transmission resource of the reference signal for the terminal in the RRC idle or inactive mode in a pre-agreed manner or through semi-static signaling (e.g., dedicated RRC signaling) or dynamic signaling (e.g., MAC CE).

The transmission resource may be, for example, included in the frequency domain resources including a Control Resource Set (CORESET) #0 and/or an initial Bandwidth Part (initial BWP); or the transmission resource is included in the frequency domain resources with a frequency offset from the CORESET#0 and/or initial BWP less than a preset value. For example:
there is an overlap of at least one RE between the RS transmission resource and the CORESET#0 and/or initial BWP;
the RS transmission resource is in the dedicated BWP configured by the base station for the UE in the connected state;
the RS transmission resource is associated with the SSB when the UE is in the idle and/or active mode;
in terms of frequency, the RS transmission resource is within the maximum frequency range formed by the SSB and the initial BWP.

Several specific embodiments will be introduced below.

### Embodiment 1

The network configures the transmission resource of the reference signal for the terminal in the RRC_IDLE or RRC_Inactive state within a single cell/base station or multiple cells/base stations through static signaling (for example, standard convention method of the base station and terminal) and/or semi-static signaling (for example, high-layer RRC signaling) and/or dynamic signaling (for example, MAC CE), where the configuration information of the transmission resource may preferably include at least the frequency domain resource for sending the RS, and may also include a time metric value between the RS transmission resource and the signal or channel sending in the RRC_IDLE or RRC_Inactive mode, for example, a time offset value between the RS transmission resource and the signal/channel sending in the RRC_IDLE or RRC_Inactive mode. For example, the base station or network configures the high-layer signaling for the UE, where the high-layer signaling is valid in the RRC-idle or inactive state or during the DRX OFF cycle in the RRC-connected state, or this signaling is applied in the RRC-idle or inactive state or the DRX OFF cycle in the RRC-connected state. The RS sent on the resource can be used for channel tracking, link maintenance, CSI measurement, beam management or other functions, and even RRM measurement. The prior art does not sending and receiving of RS when UE is in the RRC_IDLE or RRC_Inactive state or in the DRX OFF duration (i.e., inactive period) in the RRC-connected state. More specifically, for example, the base station may configure the reference signal transmission resources of one or more cells for the UE in the RRC-connected mode (i.e., connected state) through RRC signaling or in a pre-agreed manner in the standard or through MAC CE. Since the UE in the RRC_IDLE or RRC_Inactive state will switch to other cell as the position moves while the base station side does not know the current position of the UE, the reference signal transmission resources configured for the UE in the connected state preferably include transmission resources in at least one cell or cell group. For example, it can be considered to divide a plurality of predetermined cells/base stations (such as a plurality of cells/base stations in the TA (Tacking Area) corresponding to the idle state or the RNA (RAN-based Notification Area) corresponding to the Inactive state) into a plurality of groups, where each cell/base station group is configured with the same reference signal transmission resource. In a special case, the plurality of predetermined cells/base stations are divided into only one group, that is, the plurality of cells/base stations within the predetermined range are all configured with the same reference signal transmission resource. Considering that the base station does not know the position of the UE in the RRC_IDLE or RRC_Inactive mode, preferably a plurality of base stations in the predetermined area simultaneously send reference signals on the resources configured for the reference signal transmission in the RRC_IDLE or RRC_Inactive mode. The reference signal is used for at least one of channel tracking, link maintenance, CSI measurement, beam management, RRM measurement or other functions. Considering that the UE may move out of the plurality of predetermined cells, in order to reduce the overhead, preferably the network does not send the above-mentioned reference signal on the configured RS resources in other cells than the plurality of predetermined cells.

The base station configures the RS transmission resource in the RRC_IDLE or RRC_Inactive mode. For example, the base station may transmit the RRC signaling to configure the configuration information of the RS transmission resource in the RRC_IDLE or RRC_Inactive mode. For example, the base station schedules the configuration information of the RS transmission resource through a PDCCH carried by the CORESET#0 or search space#0, where the PDCCH may be scrambled by the SI-RNTI (System Information RNTI) or a new RNTI, such as a newly-configured RS-RNTI (Reference Signal RNTI). When the PDCCH that schedules the configuration information of the RS resource is scrambled by the SI-RNTI, the RRM signaling is actually transmitted through the system information such as SIB1 resource. Although the configuration information of the RS resource is not the system information, the configuration information of the RS resource can be transmitted via the system information resource. When the PDCCH that schedules the configuration information of the RS resource is scrambled by the new RNTI, the DCI format may reuse DCI format 0_0/1_0.

The above method for the RRC idle or inactive mode is also applicable to the DRX OFF duration in the RRC-connected mode.

### Embodiment 2

The base station or the network configures, through explicit signaling or implicit signaling for the terminal in the connected state, whether the terminal in the RRC_IDLE or RRC_Inactive mode needs to receive the RS configured according to the RRC signaling or whether the UE is configured with the RS transmission resource in the RRC_IDLE or RRC_Inactive mode. For example, the base station notifies the terminal of whether the RS transmission resource is configured for the RRC_IDLE or RRC_Inactive mode through the RRC signaling or MAC CE or physical-layer explicit signaling. If the signaling is not configured, the default state is adopted. The preferred default state is: not allowing the UE to receive the corresponding RS on the configured resource/allowing the UE to receive the corresponding RS on the configured resource.

More specifically, the base station may configure the RS resource for the terminal in advance, where the resource is used for sending the RS when the UE is in the RRC_IDLE or RRC_Inactive mode. If the base station is configured to allow the UE to receive the RS on the corresponding resource, for example, 1 bit is used for indication, or a high-layer signaling is configured, and other methods are not excluded. The UE may be in the center of the cell or have the better channel condition or have just received the SSB with no need to receive an additional RS, but the UE enters the cell edge as the UE moves. The terminal receives the RS in the RRC_IDLE or RRC_Inactive mode according to its own actual requirements, to meet the actual requirements such as channel tracking, RRM measurement, CSI measurement, etc. In another way, the base station and the terminal pre-agree the actual sending opportunity of the RS through a preset rule. For example, if there is no SSB within a preset time period from the signal/channel sending in the RRC_IDLE or RRC_Inactive mode, then the base station sends the RS on the preset resource of the RS. The sending offset of the sending frequency domain resource of the RS and its time domain relative to the signal/channel sending in the RRC_IDLE or RRC_Inactive mode is preferably notified by high-layer signaling or pre-agreed, and the offset is preferably greater than or equal to 0 OFDM without excluding less than 0 OFDM. The UE receives the RS signal on the resource corresponding to the RS. Otherwise, the terminal does not wish to receive the corresponding RS signal on the RS sending opportunity that does not satisfy the preset rule.

The above-mentioned RS transmission resources may also be periodic RS resources configured by the base station for the UE. For example, in one case, the RS resources are configured by the base station for the UE in the connected state and can be used in the connected state. At this time, the RS resources used by the base station in the connected state may be partially or fully applied to the RRC_IDLE or RRC_Inactive mode according to the instruction of the base station. The base station needs to continue sending the RS on the designated RS resource in the RRC_IDLE or RRC_Inactive mode, and the UE continues receiving the RS signal on the corresponding RS resource as needed in the RRC_IDLE or RRC_Inactive mode. In the prior art, the RS configured in the RRC-connected state is invalid in the RRC_IDLE or RRC_Inactive mode, the base station does not send the RS, and the UE does not receive the RS. In another case, the RS resource may be configured for a group of UEs, and may be, for example, used for the connected state. Even if the current UE is in the RRC_IDLE or RRC_Inactive mode, other UEs configured with this RS resource are likely to be in the RRC-connected mode, so the base station may also continue sending the RS signal on the configured RS resource when the current UE is in the RRC_IDLE or RRC_Inactive mode. Preferably, if the base station configures the UE to receive the RS resource configured according to the RRC signaling, that is, continue using the RS resource, in the RRC_IDLE or RRC_Inactive mode, then the UE receives the RS corresponding to the RS resource in the RRC_IDLE or RRC_Inactive mode as needed, for example, continues receiving the RS before receiving data or control signaling, or continues receiving the RS during the RRM measurement, or other purposes as described above.

The base station or network may preferably configure a dedicated RRC signaling for the UE. The RRC signaling has a feature that: the RRC signaling takes effect in the idle and/or inactive mode, is configured to to configure the configuration information related to the RS communication when the UE is in the RRC_IDLE or RRC_Inactive mode, and the configuration information related to the RS communication may, for example, include the resource configuration information and/or whether RS resources are configured for the UE in the RRC_IDLE or RRC_Inactive mode. The functions of the RS are the same as those described above, and will not be repeated here. The above-mentioned RRC configuration signaling that takes effect in the RRC_IDLE or RRC_Inactive mode may implicitly notify the UE to receive the corresponding RS on the corresponding resource.

### Embodiment 3

When the base station or the base station group configures the transmission resource of the reference signal in the RRC_IDLE or RRC_Inactive state for the UE through RRC signaling, considering that more resources will be occupied in practice when a plurality of cells/base stations send reference signals in the RRC_IDLE or RRC_Inactive state at the same time, a preferred implementation is: the base station configures the configuration information of the RS transmission resource for the terminal in the RRC_IDLE or RRC_Inactive state through the above-mentioned high-layer signaling, and the UE receives the corresponding RS signal in the RRC_IDLE or RRC_Inactive state in the current cell according to the configuration of the base station. Preferably, the method may support that only one base station sends the RS signal to the UE. The process is as follows.

Step 1: The UE sends the RS transmission resource request information to the base station in the connected state, where the RS resource is the resource on which the UE needs to receive the RS in the RRC_IDLE or RRC_Inactive state.

Step 2: The base station configures whether the UE receives the corresponding RS in the RRC_IDLE or RRC_Inactive state; if the base station configures that the UE needs to or may receive the corresponding RS in the RRC_IDLE or RRC_Inactive state or the base station configures the RS transmission resource for the UE, the UE receives the RS configured by the base station on the corresponding resource in the current resident cell; if the base station configures no corresponding RS transmission resource for the UE in the RRC_IDLE or RRC_Inactive state, the UE does not receive the corresponding RS.

If the UE moves out of the current cell in the RRC_IDLE or RRC_Inactive state and resides in a new cell, the UE re-enters the connected state and sends the RS resource request information. Then, the above step 2 continues to be performed.

### Embodiment 4

The base station configures the valid period of the UE in the RRC_IDLE or RRC_Inactive state or the aperiodic RS transmission resource through high-layer signaling or physical-layer signaling. For example, in the connected state, the base station configures the periodic RS sending opportunity that takes effect in the RRC_IDLE or RRC_Inactive mode for the UE through RRC signaling; or the base station and the terminal configure one part of the RS transmission configuration information in a pre-agreed manner, and configure the other part of the RS transmission configuration information through RRC signaling; or configure one part of the RS transmission configuration information through RRC signaling, and configure the other part of the RS transmission resource configuration information dynamically through MAC CE. The above RS transmission resource takes effect when the UE is in the RRC_IDLE or RRC_Inactive state.

In fact, the base station sends the RS signal simultaneously in one or more predetermined cells on the RS resource for the RRC_IDLE or RRC_Inactive mode configured for the terminal, causing a large system overhead, and it is easy to form an always on signal. Preferably, the base station determines the RS sending opportunity according to a preset rule and sends the RS signal at the RS sending position that meets the requirement, and the UE only receives the RS signal on the corresponding transmission resource. The preset rule, for example, may be: the sending opportunity of the RS signal may be associated with the signal/channel sending resource in the RRC_IDLE or RRC_Inactive mode. For example, preferably the time domain sending opportunity of the RS is always located at the agreed position before the sending resource of the system information or partially overlaps with the sending position of the system information. Since other system information than the MIB (Master information block) carried by the SSB can only be received after receiving the system message broadcast in paging, the system information is not an always on signal, and thus the associated RS is not an always on signal either. For another example, the message 2/message 4 in the Physical Random Access Channel (PRACH) process is not an always on signal. If the RS sending opportunity is associated with it, the RS signal may also be avoided from being an always on signal, and the system performance can be effectively improved. Therefore, a relatively simple method is to configure the corresponding RS resource for a signal/channel with the transmission opportunity being aperiodic in the RRC_IDLE or RRC_Inactive mode, and the sending opportunity of this RS is associated in a predetermined manner with the opportunity of transmitting the signal/channel in the RRC_IDLE or RRC_Inactive mode.

The transmission opportunity of the signal transmitted in the RRC_IDLE or RRC_Inactive mode is often periodic. For example, the receiving opportunity of the paging signal is periodic in the RRC_IDLE or RRC_Inactive mode. For another example, for the energy-saving signal for waking up the UE to receive paging, since the detection opportunity of paging is periodic, the detection opportunity of the energy-saving signal is also periodic, or the signal for RMM measurement is also often a periodic signal. For such signals/channels with periodic sending opportunities, if an RS signal is configured for each sending opportunity, an always on signal will be inevitably caused. Similar to the scenario where the transmission opportunity is aperiodic, the RS transmission resource corresponding to the signal/channel (such as the paging signal or the energy-saving signal corresponding to the paging signal) of which the sending opportunity is periodic may also be associated with the signal/channel periodically received by the UE in the RRC_IDLE or RRC_Inactive state. Taking paging as an example, the base station may use the method agreed by the base station or the terminal or the method of RRC signaling configuration to configure the transmission resource for sending the RS signal at the position associated with the Paging Frame (PF) or Paging Occasion (PO) for paging transmission. More specifically, there is a common RS signal transmission resource for each PF or several PFs. Therefore, one RS resource may be associated with sending opportunities of signals/channels of one or more UEs in the RRC_IDLE or RRC_Inactive state, so as to reduce the RS overhead as much as possible. In the RRC_IDLE or RRC_Inactive state, the association of the receiving opportunity of the periodic signal/channel corresponding to the UE with the RS resource, i.e., the specific time-frequency position of the RS, may be determined according to a predetermined rule, for example, through the above method pre-agreed by the base station and the terminal or through RRC signaling configuration or MAC CE signaling configuration. More specifically, the base station may configure RS signal sending resource in a predetermined time window before receiving one or more signals/channels in the RRC_IDLE or RRC_Inactive state, and the UE does not want to receive the corresponding RS on the RS sending opportunities or resources outside the window. For another example, in another method, if there is an SSB between the RS resource sending opportunity and the resource of signal/channel, the UE may not want to receive the RS on the corresponding RS sending opportunity. In fact, the base station may not need to send the RS signal on the resource on which the UE does not want to receive the RS signal, thereby reducing the overhead. In a word, for the signal/channel with the sending opportunity in the RRC_IDLE or RRC_Inactive state being periodic, the corresponding RS transmission resource is configured by high-layer signaling, and the sending opportunity of RS is associated with the signal/channel that the UE needs to receive periodically in the RRC_IDLE or RRC_Inactive state. Preferably, the base station may only send the RS signal when the above signal/channel is sent on the periodic sending opportunity. The UE side can firstly receive the corresponding RS signal, and then try to receive the signal/channel sent in the RRC_IDLE or RRC_Inactive state. Further, another processing method is: preferably on the UE side, if the RS for channel tracking is detected in the RRC_IDLE or RRC_Inactive mode, the subsequent signal/channel (such as paging) detection or energy-saving signal detection in the RRC_IDLE or RRC_Inactive state can be triggered; otherwise, the UE abandons the subsequent signal/channel (such as paging) detection opportunity in the RRC_IDLE or RRC_Inactive state associated with the RS resource.

As mentioned above, for the signal/channel with the sending opportunity being periodic (such as a paging signal or an energy-saving signal corresponding to the paging signal), taking paging as an example, if there is paging transmission on the paging sending opportunity corresponding to each RS transmission resource, the RS resource is periodic; if there is no paging transmission on the paging sending opportunities corresponding to some RS resources, the base station may not send the RS on these RS transmission resources. In this way, the actual transmission resources of the RS are aperiodic. The base station configures periodic RS sending opportunities for the terminal, however, only when the preset rule is met, the base station will actually send a temporary RS signal on these sending opportunities according to the RS transmission resources configured by high-layer signaling. Preferably, this RS signal may be UE specific, or may be applicable to a group of UEs, i.e., group specific, or may be applicable to all UE in the cell, i.e., cell specific.

When the base station configures the corresponding RS resource for the signal/channel when the UE is in the RRC_IDLE or RRC_Inactive state, the RS resource may be used not only for channel tracking, RMM measurement, etc., but also for triggering the receiver to perform the detection of the signal/channel (such as paging, system information, or message 2 or message 4 in the PRACH process, etc.) of the UE in the RRC_IDLE or RRC_Inactive state.

### Embodiment 5

The base station configures the transmission resource of the reference signal in the RRC idle or inactive mode for the terminal in a pre-agreed manner or through semi-static signaling (e.g., RRC signaling) or dynamic signaling (e.g., MAC CE). Preferably, the transmission resource is included in the frequency domain resources including the CORESET#0 (Control Resource Set)/initial BWP (Bandwidth Part) or on the frequency domain resources with a frequency offset from the CORESET#0/initial BWP less than a preset value.

For the UE in the RRC_IDLE or RRC_Inactive mode, if there is no high-layer signaling to configure the initial BWP, the initial BWP range is: starting from the PRB with the lowest index in the CORESET#0 to the PRB with the highest index in the CORESET#0. If the high-layer signaling configures the initial BWP, the initial BWP must contain the CORESET#0, so the base station preferably configures the RS transmission resource on the CORESET#0/initial BWP. This method is the simplest to implement.

Instead of being configured on the CORESET#0/initial BWP, the RS transmission resource configured by the base station in the RRC idle or inactive mode may preferably also be configured on the resources rather than CORESET#0/initial BWP. For example, on the frequency domain resource allowing the offsets between the lowest/highest frequency of the RS resource and the center frequency of the CORESET#0/initial BWP or allowing the offsets between the lowest/highest frequency of the RS resource and the lowest/highest frequency of the CORESET#0/initial BWP being less than a preset value. This is because the UE in the RRC_IDLE or RRC_Inactive state can utilize the RS resource configured for other UE in the connected state, as in the scenario where the periodic RS resources are configured for a plurality of UEs. The UE can be configured with up to 4 dedicated BWPs in the connected state, the BWPs configured between different UEs may not be aligned, and the UE specific BWP and the initial BWP often do not completely overlap, so the RS resource may deviate from the initial BWP of the UE in the frequency domain. However, in order to prevent the UE in the RRC idle or inactive mode from working in a large bandwidth, the RS resource configured for the UE is preferably limited within the certain preset frequency offset mentioned above, thus helping the UE to receive only the narrowband signals in the RRC idle or inactive mode, and facilitating the UE to save energy. The preset value of the frequency offset is preferably configured by the base station through signaling, such as RRC signaling/MAC CE/PDCCH; or may be pre-defined by standard through an agreed method; of course, it is not excluded that the standard defines a plurality of offset candidate values according to the UE capability, and the base station configures the specific value for the terminal through signaling.

When the above RS resource is not included in the CORESET#0/initial BWP resources, in addition to the above-mentioned case of not exceeding the preset value comparing with the frequency domain position of the CORESET#0/initial BWP, other methods may also be used. For example, Method 1: the RS transmission resource must have an overlap of at least one RE with the CORESET#0/initial BWP, so that it can be ensured that the distance between the RS transmission resource and the CORESET#0/initial BWP is not too large, thereby reducing the power consumption of the UE; Method 2: the RS transmission resource is located in a certain dedicated BWP (such as default BWP) configured for the UE by the base station in the connected state, so that the RS resource configured by the base station for the UE in the connected state can be directly received in the RRC idle or inactive mode. The advantage of this method is: the configuration is simple and flexible; while the disadvantage is: there may be BWP handover during the receiving at the UE side, causing the increased complexity and power consumption. Method 3: the RS transmission resource is associated with the SSB in the idle/active mode, for example, the frequency resource is a function of the SSB frequency resource; for example, the central frequency of the SSB is associated with the central frequency or the lowest or highest frequency of the RS transmission resource; or the distance between the lowest frequency of the RS transmission resource and the highest frequency of the SSB is a predetermined value; or the distance between the highest frequency of the RS transmission resource and the lowest frequency of the SSB is a predetermined value. Method 4: the frequency of the RS transmission resource is within the maximum frequency range formed by the SSB and the initial BWP; since the SSB may be outside the initial BWP and the distance from the initial BWP is a determined value, the frequency domain range of the RS preferably does not exceed the range formed by the maximum and minimum frequencies of the SSB and the initial BWP, thereby ensuring that the UE receives the RS with a smaller bandwidth.

The method described in the above embodiments is developed for the RRC idle or inactive mode, but the above method is also applicable to the DRX OFF cycle in the RRC-connected mode.

To sum up, the embodiments of the present application provide the following technical solution.

The base station configures the RS resource for the terminal in the RRC idle or inactive mode, to avoid the always on signal.

The base station configures the dedicated signaling that takes effect in the RRC idle or inactive mode for the terminal.

The same RS signal sent by a plurality of base stations at the same time needs to meet a predetermined rule.

The RS signal sent by a single base station requires the RS resource request information sent by the UE in the connected state; and the RS resource configured by the base station for the RS needs to meet the predetermined condition (Embodiment 3).

The base station or the network configures, through explicit signaling or implicit signaling in the connected state, whether the terminal needs to receive the RS configured according to the RRC signaling in the RRC_IDLE or RRC_Inactive mode or whether the UE is configured with the RS transmission resource in the RRC_IDLE or RRC_Inactive mode. The base station configures periodic RS sending opportunities for the terminal, however, only when the preset rule is met, the base station will actually send a temporary RS signal on these sending opportunities according to the RS transmission resources configured by high-layer signaling. This RS signal may be UE specific, or may be applicable to a group of UEs, i.e., group specific, or may be applicable to all UE in the cell, i.e., cell specific.

The base station configures the transmission resource of the reference signal in the RRC idle or inactive mode for the terminal in a pre-agreed manner or through semi-static signaling (e.g., RRC signaling) or dynamic signaling (e.g., MAC CE).

Referring to FIG. 2, on the network side, for example, on the base station side, a signal communication method according to embodiments of the present application includes the following.

S101: determining a reference signal transmission resource configured for a terminal.

S102: sending a reference signal to the terminal in an idle state or in an inactive state or in an inactive period of a connected state through the reference signal transmission resource.

Optionally, the transmission resource is configured for the terminal through pre-appointment and/or high-layer signaling and/or dynamic signaling.

Optionally, when the terminal is in the connected state, the reference signal transmission resource is configured for the terminal; or configuration information of the reference signal transmission resource is scheduled through a PDCCH carried by a control resource set CORESET#0 or a search space #0 in the idle state or inactive state.

Optionally, a plurality of preset cells is configured with the same transmission resource.

Optionally, the transmission resource is configured for only one cell;
the method further includes: receiving a reference signal transmission resource request sent by the terminal in the connected state, where the reference signal transmission resource is configured for the terminal according to the reference signal transmission resource request.

Optionally, a preset rule is determined through negotiation with the terminal in advance; and when the preset rule is satisfied, the reference signal is sent to the terminal on the reference signal transmission resource.

Optionally, the preset rule includes:
when there is a signal to be sent by the base station in a periodic sending opportunity, sending a reference signal corresponding to the signal to be sent.

Optionally, the reference signal transmission resource is configured for the terminal through dedicated RRC signaling configured for the terminal, where the dedicated RRC signaling takes effect when the terminal is in the idle state or inactive state.

Optionally, there is a preset relationship between the reference signal transmission resource and a signal transmission resource of the terminal in the idle state or inactive state.

The reference signal transmission resource is included or is not included in a frequency domain resource of a CORESET#0 or an initial BWP, or a frequency offset between the reference signal transmission resource and the CORESET#0 or initial BWP is less than a preset value.

Optionally, when the reference signal transmission resource is not included in a frequency domain resource of a CORESET#0 or an initial BWP, the reference signal transmission resource satisfies one or a combination of:
there is an overlap of at least one RE between the reference signal transmission resource and the CORESET#0 or initial BWP;
the reference signal transmission resource is located in a dedicated BWP configured by a base station for the terminal in the connected state;
the reference signal transmission resource is associated with an SSB of the terminal in the idle state or inactive state.

Optionally, the method further includes:
when the terminal is in the connected state, notifying the terminal of whether a reference signal transmission resource is configured for the terminal in the idle state or inactive state through explicit signaling or implicit signaling.

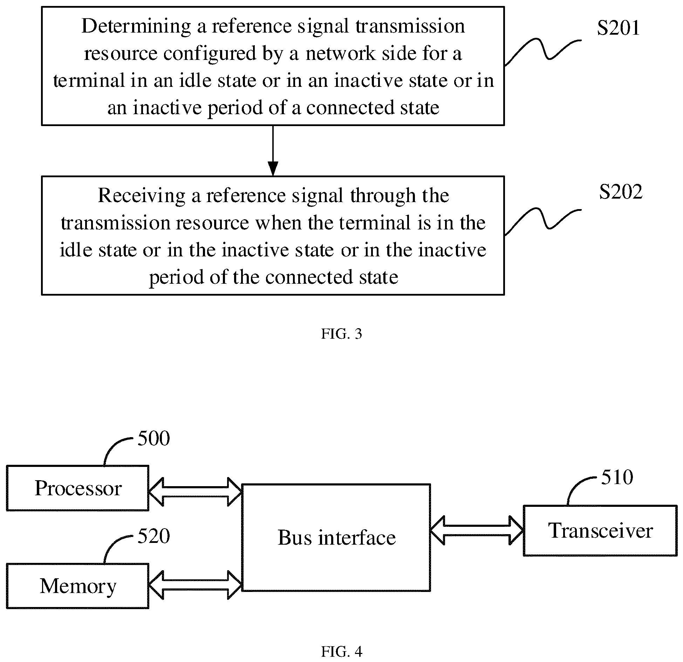

Correspondingly, referring to FIG. 3, on the terminal side, a signal communication method according to embodiments of the present application includes the following.

S201: determining a reference signal transmission resource configured by a network side for a terminal in an idle state or in an inactive state or in an inactive period of a connected state.

S202: receiving a reference signal through the reference signal transmission resource when the terminal is in the idle state or in the inactive state or in the inactive period of the connected state.

Optionally, the transmission resource configured by the network side for the terminal is obtained through pre-appointment and/or high-layer signaling and/or dynamic signaling.

Optionally, a preset rule is determined through negotiation with the network side in advance; and when the preset rule is satisfied, the reference signal is received on the transmission resource.

Optionally, if the reference signal is detected, a signal detection in the idle state or inactive state is further performed; otherwise, the subsequent signal detection in the idle state or inactive state associated with the transmission resource is abandoned.

Referring to FIG. 4, on the network side, a signal communication device according to embodiments of the present application includes:
a memory 520 configured to store program instructions;
a processor 500 configured to invoke the program instructions stored in the memory, and execute according to an obtained program:
   determining a reference signal transmission resource configured for a terminal;
   sending a reference signal to the terminal in an idle state or in an inactive state or in an inactive period of a connected state through the reference signal transmission resource.

Optionally, the reference signal transmission resource is configured for the terminal through pre-appointment and/or high-layer signaling and/or dynamic signaling.

Optionally, when the terminal is in the connected state, the transmission resource is configured for the terminal; or configuration information of the transmission resource is scheduled through a PDCCH carried by a control resource set CORESET#0 or a search space #0 in the idle state or inactive state.

Optionally, a plurality of preset cells is configured with the same transmission resource.

Optionally, the transmission resource is configured for only one cell;
the processor 500 is further configured to: receive a reference signal transmission resource request sent by the terminal in the connected state, where the reference signal transmission resource is configured for the terminal according to the reference signal transmission resource request.

Optionally, a preset rule is determined through negotiation with the terminal in advance; and when the preset rule is satisfied, the reference signal is sent to the terminal on the reference signal transmission resource.

Optionally, the preset rule includes:
when there is a signal to be sent by the base station in a periodic sending opportunity, sending a reference signal corresponding to the signal to be sent.

Optionally, the transmission resource is configured for the terminal through dedicated RRC signaling configured for the terminal, where the dedicated RRC signaling takes effect when the terminal is in the idle state or inactive state.

Optionally, there is a preset relationship between the reference signal transmission resource and a signal transmission resource of the terminal in the idle state or inactive state.

The reference signal transmission resource is included in a frequency domain resource of a CORESET#0 or an initial BWP, or a frequency offset between the reference signal transmission resource and the CORESET#0 or initial BWP is less than a preset value.

Optionally, when the reference signal transmission resource is not included in a frequency domain resource of a CORESET#0 or an initial BWP, the reference signal transmission resource satisfies one or a combination of:
there is an overlap of at least one RE between the reference signal transmission resource and the CORESET#0 or initial BWP;
the reference signal transmission resource is located on a dedicated BWP configured by a base station for the terminal in the connected state;
the reference signal transmission resource is associated with an SSB of the terminal in the idle state or inactive state.

Optionally, the processor 500 is further configured to:
when the terminal is in the connected state, notify the terminal of whether a reference signal transmission resource is configured for the terminal in the idle state or inactive state through explicit signaling or implicit signaling.

A transceiver 510 is configured to receive and send the data under the control of the processor 500.

Here, in FIG. 4, the bus architecture may include any numbers of interconnected buses and bridges, and specifically link various circuits of one or more processors represented by the processor 500 and the memory represented by the memory 520. The bus architecture may further link various other circuits such as peripheral device, voltage regulator and power management circuit, which are all well known in the art and thus will not be further described again herein. The bus interface provides an interface. The transceiver 510 may be a plurality of elements, i.e., include a transmitter and a receiver, and provide the units for communicating with various other devices over the transmission media. The processor 500 is responsible for managing the bus architecture and general processing, and the memory 520 may store the data used by the processor 500 when performing the operations.

The processor 500 may be Central Processing Unit (CPU), Application Specific Integrated Circuit (ASIC), Field-Programmable Gate Array (FPGA) or Complex Programmable Logic Device (CPLD).

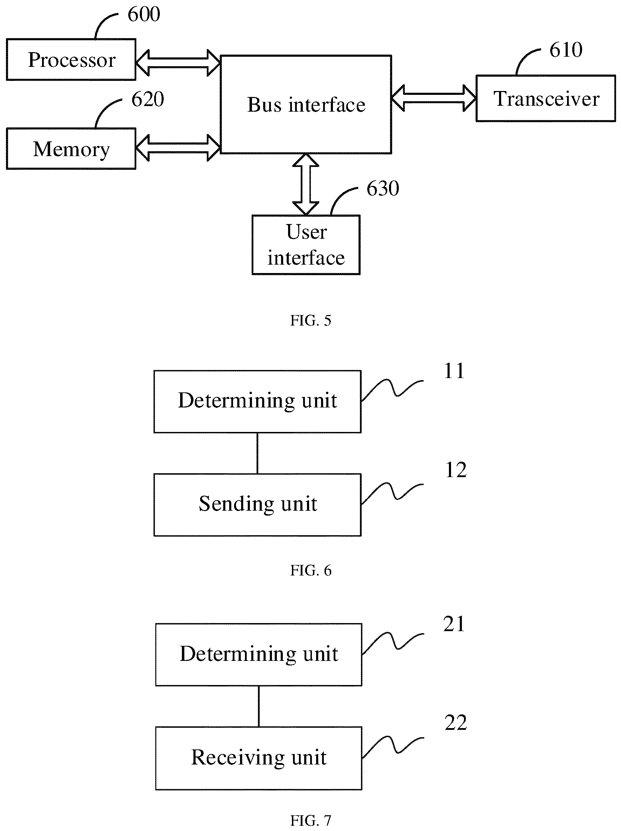

Referring to FIG. 5, on the terminal side, a signal communication device according to embodiments of the present application includes:
a memory 620 configured to store program instructions;
a processor 600 configured to invoke the program instructions stored in the memory, and execute according to an obtained program:
   determining a reference signal transmission resource configured by a network side for a terminal in an idle state or in an inactive state or in an inactive period of a connected state;
   receiving a reference signal through the reference signal transmission resource when the terminal is in the idle state or in the inactive state or in the inactive period of the connected state.

Optionally, the reference signal transmission resource configured by the network side for the terminal is obtained through pre-appointment and/or high-layer signaling and/or dynamic signaling.

Optionally, a preset rule is determined through negotiation with the network side in advance; and when the preset rule is satisfied, the reference signal is received on the transmission resource.

Optionally, if the reference signal is detected, a signal detection in the idle state or inactive state is further performed; otherwise, the subsequent signal detection in the idle state or inactive state associated with the transmission resource is abandoned.

A transceiver 610 is configured to receive and send the data under the control of the processor 600.

Here, in FIG. 5, the bus architecture may include any numbers of interconnected buses and bridges, and specifically link various circuits of one or more processors represented by the processor 600 and the memory represented by the memory 620. The bus architecture may further link various other circuits such as peripheral device, voltage regulator and power management circuit, which are all well known in the art and thus will not be further described again herein. The bus interface provides an interface. The transceiver 610 may be a plurality of elements, i.e., include a transmitter and a receiver, and provide the units for communicating with various other devices over the transmission media. For different user equipment, the user interface 630 may also be the interface capable of inter-connecting or exter-connecting with the required devices, and the connected devices include but not limited to keypad, display, loudspeaker, microphone, joystick and the like.

The processor 600 is responsible for managing the bus architecture and general processing, and the memory 620 may store the data used by the processor 600 when performing the operations.

Optionally, the processor 600 may be Central Processing Unit (CPU), Application Specific Integrated Circuit (ASIC), Field-Programmable Gate Array (FPGA) or Complex Programmable Logic Device (CPLD).

On the network side, referring to FIG. 6, another signal communication device according to embodiments of the present application includes:
a determining unit 11 configured to determine a reference signal transmission resource configured for a terminal;
a sending unit 12 configured to send a reference signal to the terminal in an idle state or in an inactive state or in an inactive period of a connected state through the reference signal transmission resource.

On the terminal side, referring to FIG. 7, another signal communication device according to embodiments of the present application includes:
a determining unit 21 configured to determine a reference signal transmission resource configured by a network side for a terminal in an idle state or in an inactive state or in an inactive period of a connected state;
a receiving unit 22 configured to receive a reference signal through the transmission resource when the terminal is in the idle state or in the inactive state or in the inactive period of the connected state.

It should be noted that the division of units in the embodiments of the present application is illustrative, and is merely a kind of logical function division, and there may be other division methods in actual implementations. In addition, the functional units in each embodiment of the present application may be integrated into one processing unit, or each unit may exist alone physically, or two or more units may be integrated into one unit. The above-mentioned integrated units can be implemented in the form of hardware, or can be implemented in the form of software functional units.

When the integrated unit is implemented in the form of software functional unit and sold or used as an independent product, it may be stored in a computer readable storage medium. Based on such understanding, the technical solution of the present application essentially or a part that contributes to the prior art or all or a part of the technical solution may be embodied in the form of software product. The computer software product is stored in a storage medium, and includes several instructions used to enable a computer device (which may be a personal computer, server, or network device, etc.) or a processor to perform all or some of the steps of the methods of various embodiments of the present application. The above-mentioned storage medium includes: USB flash drive, mobile hard disk, Read-Only Memory (ROM), Random Access Memory (RAM), magnetic disk or compact disc or various media that can store the program codes.

An embodiment of the present application provides a computing device, which can specifically be a desktop computer, a portable computer, a smart phone, a tablet computer, a Personal Digital Assistant (PDA) or the like. The computing device can include a Center Processing Unit (CPU), a memory, input/output devices and the like. The input device can include a keyboard, a mouse, a touch screen and the like, and the output device can include a display device such as Liquid Crystal Display (LCD), Cathode Ray Tube (CRT) or the like.

The memory can include a Read-Only Memory (ROM) and a Random Access Memory (RAM), and provide the program instructions and data stored in the memory to the processor. In an embodiment of the present application, the memory may be used to store the program of any one of the methods provided by the embodiments of the present application.

The processor invokes the program instructions stored in the memory and is configured to perform any one of the methods provided by the embodiments of the present application in accordance with the obtained program instructions.

An embodiment of the present application provides a computer storage medium for storing the computer program instructions used by the devices provided by the embodiments of the present application described above, where the computer storage medium contains the program for performing any one of the methods provided by the embodiments of the present application described above.

The computer storage medium may be any available media or data storage device accessible to the computer, including but not limited to magnetic memory (e.g., floppy disk, hard disk, magnetic tape, Magnetic Optical disc (MO) or the like), optical memory (e.g., CD, DVD, BD, HVD or the like), semiconductor memory (e.g., ROM, EPROM, EEPROM, nonvolatile memory (NAND FLASH), Solid State Disk (SSD)) or the like.

The methods provided by the embodiments of the present application may be applied to the terminal devices, and may also be applied to the network devices.

Here, the terminal device can also referred to as the User Equipment ("UE" for short), Mobile Station ("MS" for short), Mobile Terminal ("MT" for short) or the like. Optionally, the terminal can has the ability of communicating with one or more core networks via the Radio Access Network (RAN). For example, the terminal can be a mobile telephone (or called "cellular" telephone), or a computer with the mobile property. For example, the terminal can also be a portable, pocket, handheld, computer built-in or vehicle-carried mobile device.

The network device may be a base station (e.g., access point), which means the device in the access network communicating with the wireless terminal via one or more sectors over the air interface. The base station may be used to perform the inter-conversion between the received air frame and the IP packet, and used as the router between the wireless terminal and the rest of the access network, where the rest of the access network may include Internet Protocol (IP) networks. The base station may further coordinate the attribute management of the air interface. For example, the base station can be the BTS in the GSM or CDMA, or can be the NodeB in the WCDMA, or can be the NodeB or eNB or e-NodeB (evolutional Node B) in the LTE, or can be the gNB in the 5G system, or the like. which is not limited in the embodiments of the present application.

The processing flows of the above methods may be implemented by a software program, which may be stored in a storage medium. When the stored software program is invoked, the above method steps are performed.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, optical memories and the like) containing computer usable program codes therein.

The present application is described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

## Claims

1. A signal communication method performed by a network side device, the method comprising:
determining (S101) a reference signal transmission resource configured for a terminal, wherein the reference signal transmission resource is included in a frequency domain resource of a CORESET#0 or an initial Bandwidth Part, BWP or a frequency offset between the reference signal transmission resource and the CORESET#0 or initial BWP is less than a preset value;
sending (S102) a reference signal to the terminal in an idle state or in an inactive state or in an inactive period in a connected state through the reference signal transmission resource, wherein the reference signal is a Tracking Refernece Signal, TRS.

2. The method according to claim 1, wherein the reference signal transmission resource is configured for the terminal through pre-appointment and/or high-layer signaling and/or dynamic signaling.

3. The method according to claim 1, wherein
the reference signal transmission resource is configured for the terminal when the terminal is in the connected state; or
configuration information of the reference signal transmission resource is scheduled through a Physical Downlink Control Channel, PDCCH, carried by a control resource set CORESET#0 or a search space #0 when the terminal is in the idle state or inactive state.

4. The method according to claim 1, wherein a preset rule is determined through negotiation with the terminal in advance; and the method comprises:
sending the reference signal to the terminal on the reference signal transmission resource when the preset rule is satisfied;
wherein the preset rule comprises:
when there is a signal to be sent by a base station in a periodic sending opportunity, sending a reference signal corresponding to the signal to be sent.

5. The method according to claim 1, wherein the reference signal transmission resource is configured for the terminal through dedicated RRC signaling configured for the terminal, wherein the dedicated RRC signaling takes effect when the terminal is in the idle state or inactive state.

6. The method according to claim 1, wherein there is a preset relationship between the reference signal transmission resource and a signal transmission resource of the terminal in the idle state or inactive state.

7. The method according to claim 1, wherein the method comprises:
when the terminal is in the connected state, notifying the terminal of whether the reference signal transmission resource is configured for the terminal in the idle state or inactive state through explicit signaling or implicit signaling.

8. A signal communication method performed by a terminal device, the method comprising:
determining (S201) a reference signal transmission resource configured by a network side for the terminal in an idle state or in an inactive state or in an inactive period of a connected state, wherein the reference signal transmission resource is included in a frequency domain resource of a CORESET#0 or an initial Bandwidth Part, BWP or a frequency offset between the reference signal transmission resource and the CORESET#0 or initial BWP is less than a preset value;
receiving (S202) a reference signal through the reference signal transmission resource when the terminal is in the idle state or in the inactive state or in the inactive period of the connected state, wherein the reference signal is a Tracking Refernece Signal, TRS.

9. The method according to claim 8, wherein the reference signal transmission resource configured by the network side for the terminal is obtained through pre-appointment and/or high-layer signaling and/or dynamic signaling.

10. The method according to claim 8, wherein a preset rule is determined through negotiation with the network side in advance; and the method comprises:
receiving the reference signal on the reference signal transmission resource when the preset rule is satisfied.

11. The method according to claim 8, wherein
in response to the reference signal being detected, a signal detection in the idle state or inactive state is performed;
otherwise, the subsequent signal detection in the idle state or inactive state associated with the reference signal transmission resource is abandoned.

12. A network side device comprising:
a determining unit (11) configured to determine a reference signal transmission resource configured for a terminal, wherein the reference signal transmission resource is included in a frequency domain resource of a CORESET#0 or an initial Bandwidth Part, BWP or a frequency offset between the reference signal transmission resource and the CORESET#0 or initial BWP is less than a preset value;
a sending unit (12) configured to send a reference signal to the terminal in an idle state or in an inactive state or in an inactive period of a connected state through the reference signal transmission resource, wherein the reference signal is a Tracking Refernece Signal, TRS.

13. A terminal device comprising:
a determining unit (21) configured to determine a reference signal transmission resource configured by a network side for the terminal in an idle state or in an inactive state or in an inactive period of a connected state, wherein the reference signal transmission resource is included in a frequency domain resource of a CORESET#0 or an initial Bandwidth Part, BWP or a frequency offset between the reference signal transmission resource and the CORESET#0 or initial BWP is less than a preset value;
a receiving unit (22) configured to receive a reference signal through the reference signal transmission resource when the terminal is in the idle state or in the inactive state or in the inactive period of the connected state, wherein the reference signal is a Tracking Refernece Signal, TRS.

## Patentansprüche

1. Signalkommunikationsverfahren, das durch eine netzseitige Vorrichtung ausgeführt wird, wobei das Verfahren Folgendes umfasst:
Bestimmen (S101) einer Referenzsignalübertragungsressource, die für ein Endgerät konfiguriert ist, wobei die Referenzsignalübertragungsressource in einer Frequenzbereichsressource eines CORESET#0 oder eines anfänglichen Bandbreitenteils BWP enthalten ist oder ein Frequenzoffset zwischen der Referenzsignalübertragungsressource und dem CORESET#0 oder anfänglicher BWP kleiner als ein voreingestellter Wert ist;
Senden (S102) eines Referenzsignals zu dem Endgerät in einem Leerlaufzustand oder in einem inaktiven Zustand oder in einer inaktiven Periode in einem verbundenen Zustand durch die Referenzsignalübertragungsressource, wobei das Referenzsignal ein Tracking-Referenzsignal TRS ist.

2. Verfahren nach Anspruch 1, wobei die Referenzsignalübertragungsressource für das Endgerät durch Vorterminierung und/oder Signalisierung höherer Schichten und/oder dynamische Signalisierung konfiguriert wird.

3. Verfahren nach Anspruch 1, wobei
die Referenzsignalübertragungsressource für das Endgerät konfiguriert wird, wenn sich das Endgerät in dem verbundenen Zustand befindet; oder
Konfigurationsinformationen der Referenzsignalübertragungsressource mittels eines durch einen Steuerressourcensatz CORESET#0 oder einen Suchraum #0 geführten Physical Downlink Control Channel PDCCH eingeteilt werden, wenn sich das Endgerät im Leerlaufzustand oder inaktiven Zustand befindet.

4. Verfahren nach Anspruch 1, wobei eine voreingestellte Regel durch Aushandlung mit dem Endgerät im Voraus bestimmt wird; und das Verfahren Folgendes umfasst:
Senden des Referenzsignals zu dem Endgerät auf der Referenzsignalübertragungsressource, wenn die voreingestellte Regel erfüllt ist;
wobei die voreingestellte Regel Folgendes umfasst:
wenn in einer periodischen Sendegelegenheit ein durch eine Basisstation zu sendendes Signal vorliegt, wird ein dem zu sendenden Signal entsprechendes Referenzsignal gesendet.

5. Verfahren nach Anspruch 1, wobei die Referenzsignalübertragungsressource für das Endgerät mittels für das Endgerät konfigurierter dedizierter RRC-Signalisierung konfiguriert wird, wobei die dedizierte RRC-Signalisierung wirksam wird, wenn sich das Endgerät in dem Leerlaufzustand oder inaktiven Zustand befindet.

6. Verfahren nach Anspruch 1, wobei es eine voreingestellte Beziehung zwischen der Referenzsignalübertragungsressource und einer Signalübertragungsressource des Endgeräts im Leerlaufzustand oder inaktiven Zustand gibt.

7. Verfahren nach Anspruch 1, wobei das Verfahren ferner Folgendes umfasst:
wenn sich das Endgerät in dem verbundenen Zustand befindet, Benachrichtigen des Endgeräts darüber, ob die Referenzsignalübertragungsressource für das Endgerät in dem Leerlaufzustand oder inaktiven Zustand mittels expliziter Signalisierung oder impliziter Signalisierung konfiguriert wird.

8. Signalkommunikationsverfahren, das durch eine Endgerätevorrichtung ausgeführt wird, wobei das Verfahren Folgendes umfasst:
Bestimmen (S201) einer Referenzsignalübertragungsressource, die durch eine Netzseite für das Endgerät in einem Leerlaufzustand oder in einem inaktiven Zustand oder in einer inaktiven Periode eines verbundenen Zustands konfiguriert ist, wobei die Referenzsignalübertragungsressource in einer Frequenzbereichsressource eines CORESET#0 oder einem anfänglichen Bandbreitenteil BWP enthalten ist oder ein Frequenzoffset zwischen der Referenzsignalübertragungsressource und dem CORESET#0 oder dem anfänglichen BWP kleiner als ein voreingestellter Wert ist;
Empfangen (S202) eines Referenzsignals durch die Referenzsignalübertragungsressource, wenn sich das Endgerät in dem Leerlaufzustand oder in dem inaktiven Zustand oder in der inaktiven Periode des verbundenen Zustands befindet, wobei das Referenzsignal ein Tracking-Referenzsignal TRS ist.

9. Verfahren nach Anspruch 8, wobei die Referenzsignalübertragungsressource, die durch die Netzseite für das Endgerät konfiguriert ist, durch Vorterminierung und/oder Signalisierung höherer Schichten und/oder dynamische Signalisierung erhalten wird.

10. Verfahren nach Anspruch 8, wobei eine voreingestellte Regel durch Aushandlung mit der Netzseite im Voraus bestimmt wird; und das Verfahren Folgendes umfasst:
Empfangen des Referenzsignals auf der Referenzsignalübertragungsressource, wenn die voreingestellte Regel erfüllt ist.

11. Verfahren nach Anspruch 8, wobei
als Reaktion darauf, dass das Referenzsignal detektiert wird, eine Signaldetektion in dem Leerlaufzustand oder inaktiven Zustand durchgeführt wird;
andernfalls die nachfolgende Signaldetektion in dem Leerlaufzustand oder inaktiven Zustand, die mit der Referenzsignalübertragungsressource assoziiert ist, aufgegeben wird.

12. Netzseitige Vorrichtung, umfassend:
eine Bestimmungseinheit (11), ausgelegt zum Bestimmen einer Referenzsignalübertragungsressource, die für ein Endgerät konfiguriert ist, wobei die Referenzsignalübertragungsressource in einer Frequenzbereichsressource eines CORESET#0 oder eines anfänglichen Bandbreitenteils BWP enthalten ist oder ein Frequenzoffset zwischen der Referenzsignalübertragungsressource und dem CORESET#0 oder anfänglicher BWP kleiner als ein voreingestellter Wert ist;
eine Sendeeinheit (12), ausgelegt zum Senden eines Referenzsignals zu dem Endgerät in einem Leerlaufzustand oder in einem inaktiven Zustand oder in einer inaktiven Periode in einem verbundenen Zustand durch die Referenzsignalübertragungsressource, wobei das Referenzsignal ein Tracking-Referenzsignal TRS ist.

13. Endgerätevorrichtung, umfassend:
eine Bestimmungseinheit (21), ausgelegt zum Bestimmen einer Referenzsignalübertragungsressource, die durch eine Netzseite für das Endgerät in einem Leerlaufzustand oder in einem inaktiven Zustand oder in einer inaktiven Periode eines verbundenen Zustands konfiguriert ist, wobei die Referenzsignalübertragungsressource in einer Frequenzbereichsressource eines CORESET#0 oder einem anfänglichen Bandbreitenteil BWP enthalten ist oder ein Frequenzoffset zwischen der Referenzsignalübertragungsressource und dem CORESET#0 oder dem anfänglichen BWP kleiner als ein voreingestellter Wert ist;
eine Empfangseinheit (22), ausgelegt zum Empfangen eines Referenzsignals durch die Referenzsignalübertragungsressource, wenn sich das Endgerät in dem Leerlaufzustand oder in dem inaktiven Zustand oder in der inaktiven Periode des verbundenen Zustands befindet, wobei das Referenzsignal ein Tracking-Referenzsignal TRS ist.

## Revendications

1. Procédé de communication de signal réalisé par un dispositif côté réseau, le procédé comprenant :
la détermination (S101) d'une ressource de transmission de signal de référence configurée pour un terminal, la ressource de transmission de signal de référence étant contenue dans une ressource dans le domaine fréquentiel d'un CORESET#0 ou d'une partie de bande passante, notée BWP, initiale, ou un décalage de fréquence entre la ressource de transmission de signal de référence et le CORESET#0 ou la BWP initiale étant inférieur à une valeur prédéfinie ;
l'envoi (S102) d'un signal de référence au terminal dans un état de repos ou dans un état inactif ou dans une période d'inactivité dans un état connecté au travers de la ressource de transmission de signal de référence, le signal de référence étant un signal de référence de suivi, noté TRS.

2. Procédé selon la revendication 1, dans lequel la ressource de transmission de signal de référence est configurée pour le terminal au travers d'une pré-affectation et/ou d'une signalisation des couches supérieures et/ou d'une signalisation dynamique.

3. Procédé selon la revendication 1, dans lequel la ressource de transmission de signal de référence est configurée pour le terminal lorsque le terminal est dans l'état connecté ; ou
des informations de configuration de la ressource de transmission de signal de référence étant ordonnancées au travers d'un canal physique de contrôle descendant, noté PDCCH, véhiculé par un ensemble de ressources de contrôle CORESET#0 ou un espace de recherche #0 lorsque le terminal étant dans l'état de repos ou l'état inactif.

4. Procédé selon la revendication 1, dans lequel une règle prédéfinie est déterminée au travers d'une négociation préalable avec le terminal ; et le procédé comprenant :
l'envoi du signal de référence au terminal sur la ressource de transmission de signal de référence lorsque la règle prédéfinie est satisfaite ;
la règle prédéfinie comprenant :
en présence d'un signal à envoyer par une station de base dans une occasion d'envoi périodique, l'envoi d'un signal de référence correspondant au signal à envoyer.

5. Procédé selon la revendication 1, dans lequel la ressource de transmission de signal de référence est configurée pour le terminal au travers d'une signalisation RRC dédiée configurée pour le terminal, la signalisation RRC dédiée prenant effet lorsque le terminal est dans l'état de repos ou l'état inactif.

6. Procédé selon la revendication 1, dans lequel une relation prédéfinie existe entre la ressource de transmission de signal de référence et une ressource de transmission de signal du terminal dans l'état de repos ou l'état inactif.

7. Procédé selon la revendication 1, le procédé comprenant :
lorsque le terminal est dans l'état connecté, la notification au terminal de si la ressource de transmission de signal de référence est configurée pour le terminal dans l'état de repos ou l'état inactif au travers d'une signalisation explicite ou d'une signalisation implicite.

8. Procédé de communication de signal réalisé par un dispositif terminal, le procédé comprenant :
la détermination (S201) d'une ressource de transmission de signal de référence configurée par un côté réseau pour le terminal dans un état de repos ou dans un état inactif ou dans une période d'inactivité d'un état connecté, la ressource de transmission de signal de référence étant contenue dans une ressource dans le domaine fréquentiel d'un CORESET#0 ou d'une partie de bande passante, notée BWP, initiale, ou un décalage de fréquence entre la ressource de transmission de signal de référence et le CORESET#0 ou la BWP initiale étant inférieur à une valeur prédéfinie ;
la réception (S202) d'un signal de référence au travers de la ressource de transmission de signal de référence lorsque le terminal est dans l'état de repos ou dans l'état inactif ou dans la période d'inactivité de l'état connecté, le signal de référence étant un signal de référence de suivi, noté TRS.

9. Procédé selon la revendication 8, dans lequel la ressource de transmission de signal de référence configurée par le côté réseau pour le terminal est obtenue au travers d'une pré-affectation et/ou d'une signalisation des couches supérieures et/ou d'une signalisation dynamique.

10. Procédé selon la revendication 8, dans lequel une règle prédéfinie est déterminée au travers d'une négociation préalable avec le côté réseau ; et le procédé comprenant :
la réception du signal de référence sur la ressource de transmission de signal de référence lorsque la règle prédéfinie est satisfaite.

11. Procédé selon la revendication 8, dans lequel
en cas de détection du signal de référence, une détection de signal dans l'état de repos ou l'état inactif est réalisée ;
dans le cas contraire, la détection de signal suivante dans l'état de repos ou l'état inactif associé à la ressource de transmission de signal de référence est abandonnée.

12. Dispositif côté réseau, comprenant :
une unité de détermination (11) configurée pour déterminer une ressource de transmission de signal de référence configurée pour un terminal, la ressource de transmission de signal de référence étant contenue dans une ressource dans le domaine fréquentiel d'un CORESET#0 ou d'une partie de bande passante, notée BWP, initiale, ou un décalage de fréquence entre la ressource de transmission de signal de référence et le CORESET#0 ou la BWP initiale étant inférieur à une valeur prédéfinie ;
une unité d'envoi (12) configurée pour envoyer un signal de référence au terminal dans un état de repos ou dans un état inactif ou dans une période d'inactivité dans un état connecté au travers de la ressource de transmission de signal de référence, le signal de référence étant un signal de référence de suivi, noté TRS.

13. Dispositif terminal, comprenant :
une unité de détermination (21) configurée pour déterminer une ressource de transmission de signal de référence configurée par un côté réseau pour le terminal dans un état de repos ou dans un état inactif ou dans une période d'inactivité d'un état connecté, la ressource de transmission de signal de référence étant contenue dans une ressource dans le domaine fréquentiel d'un CORESET#0 ou d'une partie de bande passante, notée BWP, initiale, ou un décalage de fréquence entre la ressource de transmission de signal de référence et le CORESET#0 ou la BWP initiale étant inférieur à une valeur prédéfinie ;
une unité de réception (22) configurée pour recevoir un signal de référence au travers de la ressource de transmission de signal de référence lorsque le terminal est dans l'état de repos ou dans l'état inactif ou dans la période d'inactivité de l'état connecté, le signal de référence étant un signal de référence de suivi, noté TRS.
